**Europäisches Patentamt**

**European Patent Office**

**Office européen des brevets**

(19)

(11) Veröffentlichungsnummer : **0 214 156 B1**

(12)

# EUROPÄISCHE PATENTSCHRIFT

(45) Veröffentlichungstag der Patentschrift :
11.10.89

(51) Int. Cl.⁴ : **F 16 J 15/44**, F 01 D 11/02

(21) Anmeldenummer : **86900746.8**

(22) Anmeldetag : **04.02.86**

(86) Internationale Anmeldenummer :
**PCT/DE 86/00035**

(87) Internationale Veröffentlichungsnummer :
**WO/8604970 (28.08.86 Gazette 86/19)**

(54) **DICHTUNG FÜR EINE STRÖMUNGSMASCHINE.**

(30) Priorität : 16.02.85 DE 3505491

(43) Veröffentlichungstag der Anmeldung :
18.03.87 Patentblatt 87/12

(45) Bekanntmachung des Hinweises auf die Patenterteilung : 11.10.89 Patentblatt 89/41

(84) Benannte Vertragsstaaten :
DE FR GB IT

(56) Entgegenhaltungen :
DE–A– 2 036 036
DE–B– 1 178 265
DE–C– 482 825
DE–C– 494 350
DE–C– 569 812
DE–C– 836 941
FR–A– 472 493
FR–A– 2 421 314
FR–A– 2 481 377
GB–A– 845 260
GB–A– 1 059 419
US–A– 3 251 601
US–A– 3 476 396

(73) Patentinhaber : **MTU MOTOREN- UND TURBINEN-
UNION MÜNCHEN GMBH**
**Dachauer Strasse 665 Postfach 50 06 40**
**D-8000 München 50 (DE)**

(72) Erfinder : **WOLFF, Karl-Heinz**
**Eichenstrasse 5**
**D-8061 Röhrmoos/Riedenzhofen (DE)**

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

## Beschreibung

Die Erfindung bezieht sich auf eine Dichtung im Spalt zwischen Rotor und Stator einer Strömungsmaschine, die in Achsrichtung des Rotors zwei Räume unterschiedlichen Gasdrucks voneinander trennt und die im Bereich des Spaltes Dichtspitzen mit Zusatzschaufeln am Rotor- oder am Statorumfang aufweist.

Derartige Dichtungen werden derzeit meist als Labyrinthdichtungen ausgebildet, die aus einer Reihe hintereinander geschalteter Drosselstellen (Dichtspitzen) mit dazwischen befindlichen Labyrinthkammern bestehen. Auch Fluiddichtungen mit gekapselten Kammern sind bekannt. Die Dichtwirkung wird dabei hervorgerufen durch Energieverluste im Spalt zwischen rotierender Dichtspitze und Stator. Die durch den Dichtspalt fließende Leckmenge ist nahezu unabhängig von der Drehzahl des Rotors.

Aus US-A-3 251 601 ist bekannt, daß die Dichtspitzen Zusatzschaufeln tragen, die den Ablösewinkel der Strömung an den Dichtspitzen vergrößern und damit den physikalisch gleichbleibenden Spalt aerodynamisch verringern. Die Zusatzschaufeln sind deshalb ein Bestandteil der Dichtspitzen und auf dem Rücken oder dem Absatz der Dichtspitzen angeordnet.

Ein Nachteil dieser Anordnung ist, daß die Zusatzschaufeln nicht vollständig vom abzudichtenden Medium umströmbar sind, so daß sie die Wirbelbildung in einem Zwischenraum oder einer Kammer zwischen zwei Dichtspitzen nicht verstärken.

Aus der FR-A-472 493 ist bekannt, daß die Zusatzschaufeln so auf den Dichtspitzen anzubringen sind, daß sich eine Strömung einer Dichtflüssigkeit entgegen dem Druckgefälle zwischen den abzudichtenden Räumen ausbildet. Im Zwischenraum oder einer Kammer zwischen zwei Dichtspitzen soll diese Strömung nicht gestört werden, so daß dieser Zwischenraum nachteilig nicht zur Wirbelbildung beiträgt.

Aufgabe der Erfindung ist es, eine gattungsgemäße Dichtung zu schaffen, die unabhängig davon, ob der Beschaufelung eine oder mehrere Dichtspitzen vor oder nachgeschaltet sind, ihre Wirkung entfaltet und zwar progressiv wenn die Drehzahl des Rotors zunimmt.

Gelöst wird diese Aufgabe dadurch, daß die Zusatzschaufeln im wesentlichen mittig zwischen zwei Dichtspitzen beabstandet angeordnet sind und einen Anstellwinkel in Bezug auf die Rotorrichtung und/oder Rotorachse (spitzwinklig) aufweisen.

Durch die Zusatzschaufeln, ihre Anordnung und Ausbildung, wird die Leckmenge an Strömungsmedium das durch den Spalt zwischen dem Rotor und Stator noch fließen kann, progressiv reduziert. Durch die Verwirbelung innerhalb der Kammer die mit der Drehzahl zunimmt verstärkt sich dieser Effekt und bei entsprechender Auslegung der Zusatzschaufeln kann sogar eine Rückströmung vom Raum kleineren Druckes zum Raum höheren Druckes erzielt werden. Dies gilt selbst dann, wenn die Zusatzschaufeln nicht nur am rotierenden Bauteil sondern auch am Stator genenüber der Kammer (mit gleicher Mittellinie) angebracht werden. Lediglich der Anstellwinkel der Schaufeln muß in diesem Fall entgegengesetzt gewählt werden.

Mit der Erfindung ist eine Senkung der Leckmenge auf 50 % der bisherigen (bezogen auf sonst gleiche Konstruktion) ohne weiteres erreichbar. Die Erfindung läßt sich mit besonderem Vorteil anwenden bei hochdrehenden Strömungsmaschinen (etwa bis 50.000 U min$^{-1}$), bei stationären und transportablen Dampfturbinen und Gasturbinen für Fahrzeuge oder Flugzeuge oder anderen Anwendungen des allgemeinen Maschinenbaus. Die einzige Begrenzung der Anwendung der Erfindung liegt bei Turbinen die sogenannte Einlaufbeläge, insbesondere an einer Gehäuseinnenwand, aufweisen weil sich die Höhe der Zusatzschaufeln (Außendurchmesser) auf alle Fälle im Rahmen des Einlaufbereichs halten muß. Die erfindungsgemäßen Zusatzschaufeln müssen sowohl an Rotorscheiben befestigbar, (z. B. durch Anschweißen und Löten) bzw. mit diesen zugleich mittels üblicher Techniken wie Gießen und Fräsen herstellbar sein. Das Herstellverfahren richtet sich wie die Werkstoffauswahl nach denjenigen der Grundwerkstoffe der Rotorscheibe bzw. Laufschaufel oder einer Leitschaufel bzw. Gehäusewand um entweder in einem Arbeitsgang wie dieser bearbeitet bzw. hergestellt werden zu können oder hieran gut anbringbar zu sein. Dort richtet sich die Werkstoffauswahl hauptsächlich nach den Einsatz- bzw. Betriebsbedingungen der Strömungsmaschine, d. h. deren Verwendungszweck und daran gebundene technischen Daten.
Kurze Beschreibung anhand der Zeichnungen :

Ein Ausführungsbeispiel der Erfindung ist in der beigefügten Zeichnung rein schematisch dargestellt.

Es zeigen :

Fig. 1a eine Dichtung mit axialen Zusatzschaufeln,

Fig. 1b eine Abwicklung auf einen Rotor gemäß Fig. 1a,

Fig. 2a eine Dichtung mit radialer Zusatzbeschaufelung,

Fig. 2b ein Teilschnitt des Rotors in A-A- Richtung.

Wege zur Ausführung der Erfindung :

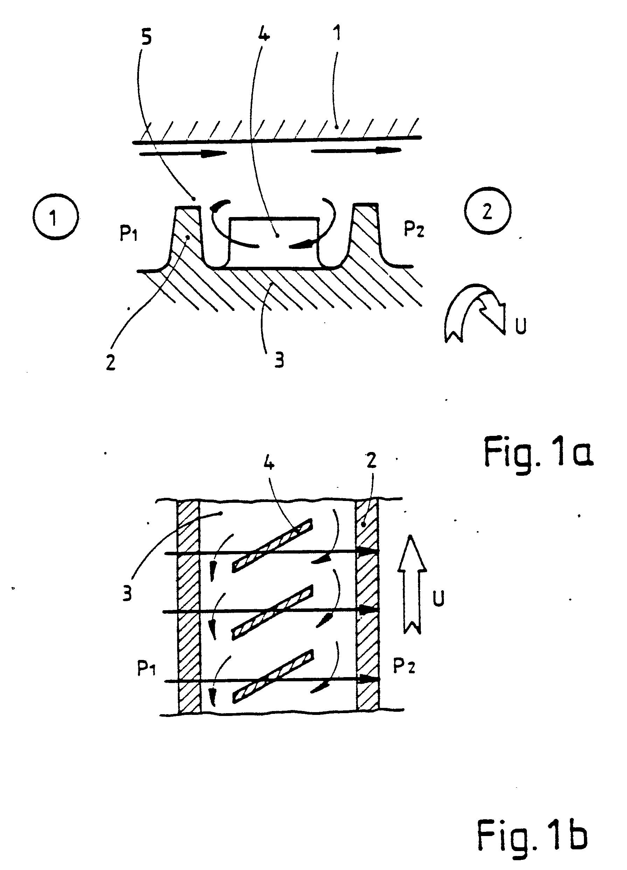

Wie Fig. 1a zeigt besitzt die Strömungsmaschine einen Stator 1 wie Gehäuse, an dessen Innenwand entlang dem Pfeil (in Fig. 1a horizontal) ein Strömungsmedium wie Gas streicht. Zwischen der Innenwand des Stators, wie Gehäuse und den Dichtspitzen 2 des Rotors 3 sind die Zusatzschaufeln 4 mittig beabstandet angeordnet. Der Spalt zwischen den Dichtspitzen und der Innenwand des Stators ist mit 5 bezeichnet.

Die Verwirbelung des Strömungsmediums in der von den Zusatzschaufeln 4 gebildeten Kammer zwischen den Dichtspitzen ist in Fig. 1a ebenfalls durch Pfeile angedeutet. Gleiches gilt für die Umdrehungsrichtung (großer Pfeil) U.

In Fig. 1a ist ferner ersichtlich, daß die Zusatzschaufeln 4 mit den Dichtspitzen 2 zwei Räume voneinander trennen, mit dem Eintrittsdruck P1 (links) welcher größer ist als der Austrittsdruck P2 (in Fig. 1a, rechts).

Fig. 1b zeigt eine Rotorabwicklung gemäß Fig. 1a wobei deutlich der spitzwinklige Anstellwinkel der Zusatzschaufeln 4 zur Rotorachse ersichtlich ist. Strömungsrichtungen sind durch Pfeile eingezeichnet und die Umdrehungsrichtung durch einen großen Pfeil U. Ansonsten sind in allen Figuren stets gleiche Bezugszeichen gewählt. Die Zahl der Schaufeln wird je nach Größe des Rotors und Verwendungszweck gewählt. Sie unterscheidet sich praktisch nicht von sonst bei gleicher Größe üblichen Lauf- oder Leitschaufelzahlen.

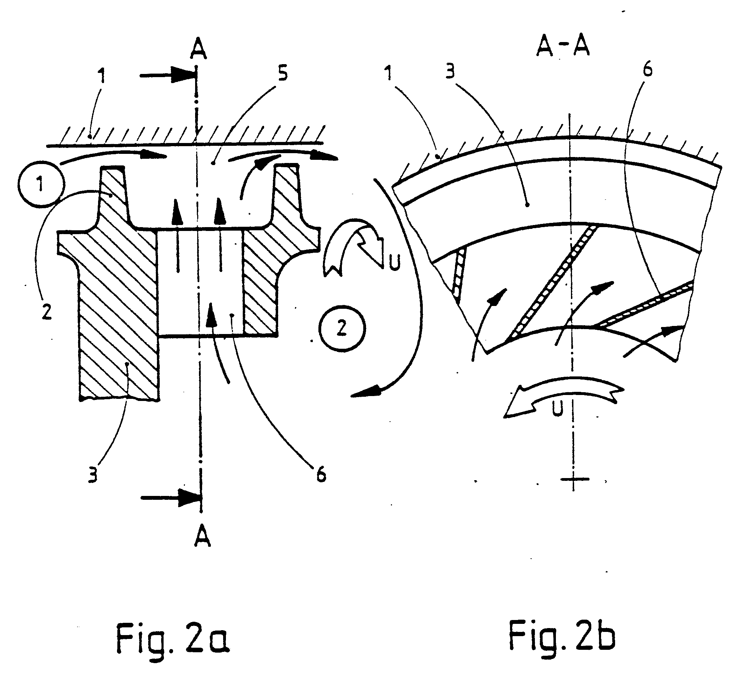

In Fig. 2a ist zum Unterschied von Fig. 1a eine radiale Zusatzschaufel ersichtlich, mit der Bezugsziffer 6. Der Fluß des Strömungsmediums und die Umlaufrichtung des Rotors ist hier wieder mit entsprechenden Pfeilen angedeutet.

In Fig. 2a ist ebenfalls die Schaufel 6 wie bei Fig. 1a die Schaufel 4 mittig zwischen zwei Dichtspitzen 2 angeordnet. Die Kammer die für die Verwirbelung zur Verfügung steht, ist jedoch hierbei etwas größer als beim ersten Ausführungsbeispiel.

Aus Fig. 2b ist insbesondere deutlich der Anstellwinkel (spitzwinklig) der Zusatzschaufeln 6 auf dem Rotor 3 und die bei A-A geteilte Scheibe bzw. Teilscheibe (auch Gitteranschweiß- oder anlötbar) zu ersehen. Die Strömungs- und Umdrehungsrichtungen sind auch hier durch Pfeile gekennzeichnet. Die Schaufelformgebung (auch aerodynamisch) ihre Abmessungen, Anstellwinkel und Zahl sind hinsichtlich des Verwirbelungseffektes aufeinander abzustimmen, jedoch sonst in den angegebenen Grenzen frei wählbar. Die Abstimmung kann vom Fachmann, je nach Auslegung der Strömungsmaschine, nach der Lehre des Anspruchs 1, getroffen werden.

Abwandlungen dieser Ausführungsbeispiele sind ohne weiteres möglich ohne hierdurch den Rahmen der Erfindung zu verlassen. Insbesondere können die Zusatzschaufeln mit fernbetätigbaren Stellgliedern für die Veränderung des Anstellwinkels versehen sein.

Die Schaufeln 6 können ein besonderes Schaufel-Gitter bilden oder einstückig mit dem Rotor hergestellt sein.

Der Rotor 3 kann auch mehrstückig ausgeführt sein, insbesondere einen Ring oder eine Rotorscheibe 3 aufweisen, der rechts und links in der Zeichnung zwei dünnere Scheiben mit den Dichtspitzen 2 benachbart sind. Diese Teile wurden in Achsrichtung z. B. auf einer zentralen Welle festgehalten. Die Teile können zwischen normal beschaufelten Rotorstufen und/oder Statorstufen wie Leitapparatur einer Strömungsmaschine oder in Achsrichtung gesehen am Anfang oder Ende einer solchen — maschine oder — stufe angeordnet sein.

Im allgemeinen Maschinenbau bei schnellaufenden Maschinen zur Abdichtung eines (Radial-) Spalts zwischen Rotor und Stator, wenn in Achsrichtung des Rotors zwei Räume unterschiedlichen Drucks vorhanden sind, insbesondere bei Strömungsmaschinen wie Turbinen, Verdichtern, Gebläsen, Ladern oder dergleichen. Ferner im Kraftwerksbau (Elektromaschinenbau) als stationäre und im Fahrzeugbau oder Flugzeugbau als transportable Anwendung.

## Patentansprüche

1. Dichtung im Spalt (5) zwischen Rotor (3) und Stator (1) einer Strömungsmaschine, die in Achsrichtung des Rotors (3) zwei Räume unterschiedlichen Gasdrucks voneinander trennt und die im Bereich des Spaltes (5) Dichtspitzen (2) mit Zusatzschaufeln (4 oder 6) am Rotor- oder am Statorumfang aufweist, dadurch gekennzeichnet, daß die Zusatzschaufeln (4 oder 6) im wesentlichen mittig zwischen zwei Dichtspitzen (2) beabstandet angeordnet sind und einen Anstellwinkel in Bezug auf die Rotorrichtung und/oder Rotorachse (spitzwinklig) aufweisen.

2. Dichtung nach Anspruch 1, dadurch gekennzeichnet, daß axiale Zusatzschaufeln (4) zwischen Dichtspitzen (2) eines Rotors (3) bzw. einer Rotorscheibe angeordnet sind.

3. Dichtung nach Anspruch 2, dadurch gekennzeichnet, daß radiale Zusatzschaufeln (6) am Umfang einer Rotorscheibe oder eines Rotors (3) zwischen Dichtspitzen angeordnet sind.

4. Dichtung nach Anspruch 2 oder 3, dadurch gekennzeichnet, daß die Zusatzschaufeln (4 oder 6) eine Querschnittsform mit parallelen Begrenzungsflächen oder aerodynamischem Profil aufweisen.

5. Dichtung nach einem der vorhergehenden Ansprüche dadurch gekennzeichnet, daß die Zusatzschaufeln (4 oder 6) auf geteilten Rotorscheiben oder Teilscheiben angeordnet sind derart, daß ihre Mittellinie durch die Mitte des Abstands zwischen zwei Dichtspitzen (2) verläuft.

6. Dichtung nach einem der vorhergehenden Ansprüche, dadurch gekennzeichnet, daß die Zusatzschaufeln (4 oder 6) in einer mit der Rotorgröße (Durchmesser) wachsenden Zahl gewählt sind.

7. Dichtung nach einem der vorhergehenden Ansprüche dadurch gekennzeichnet, daß der Anstellwinkel der Zusatzschaufeln (4 oder 6) mit steigender Drehzahl größer gewählt wird, jedoch spitzwinklig bleibt.

8. Dichtung nach einem der vorhergehenden Ansprüche, dadurch gekennzeichnet, daß die Abmessungen der Zusatzschaufeln (4 oder 6) kleiner gewählt sind als die der Dichtspitzen (2) in Bezug auf Außendurchmesser und Abstand zum Gehäuse.

## Claims

1. Seal in the gap (5) between the rotor (3) and the stator (1) of a flow machine, which separates two areas of differing gas pressure from each other in the axial direction of the rotor (3), and which, in the area of the gap (5), has sealing edges (2) with additional vanes (4 or 6) on the rotor or stator circumference, characterised in that the additional vanes (4 or 6) are arranged to be spaced substantially centrally between two sealing edges (2) and have an angle of incidence with respect to the rotor direction and/or the rotor axis (acute angle).

2. Seal according to claim 1, characterised in that axial additional vanes (4) are arranged between the sealing edges (2) of a rotor (3) or of a rotor disc.

3. Seal according to claim 2, characterised in that radial additional vanes (6) are arranged on the circumference of a rotor disc or of a rotor (3) between the sealing edges.

4. Seal according to claim 2 or 3, characterised in that the additional vanes (4 or 6) have a cross-sectional form with parallel boundary surfaces or with an aerodynamic profile.

5. Seal according to one of the preceding claims, characterised in that the additional vanes (4 or 6) are arranged on divided rotor discs or partial discs so that their centre line runs through the centre of the space between two sealing edges (2).

6. Seal according to one of the preceding claims, characterised in that the additional vanes (4 or 6) are selected in a number which increases with the rotor size (diameter).

7. Seal according to one of the preceding claims, characterised in that the angle of incidence of the additional vanes (4 or 6) is selected to be larger with increasing speed, but remains acute-angled.

8. Seal according to one of the preceding claims, characterised in that the dimensions of the additional vanes (4 or 6) are selected to be smaller than those of the sealing tips (2) with respect to the outer diameter and distance from the housing.

**Revendications**

1. Joint d'étanchéité dans l'intervalle (5) entre rotor (3) et stator (1) d'une turbomachine qui dans le sens de l'axe du rotor (3) sépare l'un de l'autre deux espaces de pression de gaz différente et qui présente dans la zone de l'intervalle (5) des pointes d'étanchéité (2) avec des aubes additionnelles (4 ou 6) sur le pourtour du rotor ou du stator, caractérisé en ce que, les aubes additionnelles (4 ou 6) sont placées essentiellement au milieu de l'intervalle entre deux pointes d'étanchéité (2) et présente un angle d'incidence par rapport au sens du rotor et/ou à l'axe du rotor (angle aigu).

2. Joint d'étanchéité selon la revendication 1, caractérisé en ce que, des aubes additionnelles axiales (4) sont placées entre des pointes d'étanchéité (2) d'un rotor (3) respectivement d'un disque de rotor.

3. Joint d'étanchéité selon la revendication 2, caractérisé en ce que, des aubes radiales (6) sont placées sur le pourtour d'un disque de rotor ou d'un rotor (3) entre des pointes épaisses.

4. Joint d'étanchéité selon la revendication 2 ou 3, caractérisé en ce que les aubes additionnelles (4 ou 6) présentent une forme de section transversale avec des périphériques parallèles ou un profil aérodynamique.

5. Joint d'étanchéité selon l'une des revendications précédentes, caractérisé en ce que, les aubes additionnelles (4 ou 6) sont aménagées sur des disques de rotor séparés ou disques-diviseurs, de sorte que, leur ligne moyenne passe par le milieu de la distance entre deux pointes d'étanchéité (2).

6. Joint d'étanchéité selon l'une des revendications précédentes, caractérisé en ce que, les aubes additionnelles (4 ou 6) sont choisies en nombre croissant avec la grandeur du rotor (diamètre).

7. Joint d'étanchéité selon l'une des revendications précédentes, caractérisé en ce que, l'angle d'incidence des aubes additionnelles (4 ou 6) est choisi plus grand pour une vitesse de rotation en augmentation, toutefois il reste aigu.

8. Joint d'étanchéité selon l'une des revendications précédentes, caractérisé en ce que, les dimensions des aubes additionnelles (4 ou 6) sont choisies plus petites que celles des pointes d'étanchéité (2) par rapport au diamètre extérieur et à la distance au carter.

Fig. 1a

Fig. 1b

Fig. 2a

Fig. 2b